# FASCICULE DE BREVET EUROPEEN

(11) **EP 2 836 371 B1**
(45) Date de publication et mention de la délivrance du brevet: **30.11.2016**
(21) Numéro de dépôt: 13720279.2
(22) Date de dépôt: 11.04.2013
(51) Int. Cl.: G02B 5/02, B42D 25/328, G06K 9/00, B41M 3/14, B42D 25/425, B42D 25/455, B42D 25/47

(54) **COMPOSANT OPTIQUE DE SECURITE, FABRICATION D'UN TEL COMPOSANT ET PRODUIT SECURISÉ EQUIPÉ D'UN TEL COMPOSANT**
OPTISCHES SICHERHEITSELEMENT, HERSTELLUNG EINES DERARTIGEM SICHERHEITSELEMENTS UND GESCHÜTZTES PRODUKT MIT DIESEM ELEMENT
OPTICAL SECURITY COMPONENT, MANUFACTURE OF SUCH A COMPONENT, AND PROTECTED PRODUCT PROVIDED WITH ONE SUCH COMPONENT

(30) Priorité: 13.04.2012 FR 1253444
(43) Date de publication de la demande: 18.02.2015
(73) Titulaire: SURYS, 77607 Marne la Vallee Cedex 3 (FR)
(72) Inventeur: SOUPARIS, Hugues, F-75012 Paris (FR); PETITON, Valery, F-77440 Vendrest (FR); TOLLET, Vincent, F-77580 Bouleurs (FR)
(74) Mandataire: Osha Liang
(86) Numéro de dépôt international: PCT/EP2013/057632
(87) Numéro de publication internationale: WO 2013/153182

(56) Documents cités:
- WO-A1-01/80175
- WO-A1-98/26373
- WO-A1-99/17941
- US-A1- 2010 071 237
- US-A1- 2011 085 241
- US-A1- 2012 064 303

## Description

### DOMAINE DE L'INVENTION

La présente invention concerne le domaine du marquage de sécurité. Plus particulièrement, elle se rapporte à un composant optique de sécurité à effet réflectif pour vérifier l'authenticité d'un produit, à un procédé de fabrication d'un tel composant et à un produit sécurisé équipé d'un tel composant.

### ETAT DE L'ART

On connaît de nombreuses technologies pour l'authentification de documents ou de produits, et notamment pour la sécurisation de documents tels que des documents de valeur de type billets de banque, passeports ou autres documents d'identification. Notamment parmi ces technologies, certaines visent à la production de composants optiques de sécurité dont les effets optiques en fonction des paramètres d'observation à l'oeil nu (orientation par rapport à l'axe d'observation, position et dimensions de la source lumineuse, etc.) prennent des configurations très caractéristiques et vérifiables. Le but général de ces composants optiques est de fournir des effets nouveaux et différenciés, à partir de configurations physiques difficilement reproductibles.

Parmi ces composants, on appelle DOVID pour "Diffractive Optical Variable Image Device", les composants optiques produisant des images diffractives et variables que l'on appelle communément les hologrammes. Ces composants sont généralement observés en réflexion, à l'oeil nu.

Les demandes de brevet français FR 2959830 et FR 2852267 décrivent de tels exemples de composants optiques de sécurité. Tous sont compatibles d'une fabrication en grands volumes, comprenant par exemple une étape de photolithographie d'une structure optique sur un support photosensible, une étape de galvanoplastie qui permet de reporter ces structures optiques dans un matériau résistant par exemple à base de Nickel pour réaliser une matrice et une étape d'estampage réalisée à partir de la matrice pour transférer la microstructure sur un film et structurer une couche en matériau diélectrique, typiquement un vernis d'estampage.

La demande de brevet WO 98/2673 décrit également une surface structurée diffractive adaptée aux éléments optiques de sécurité. Une modulation en hauteur des microstructures portées par la surface permet de générer des effets optiques variables pouvant être facilement contrôlés à l'oeil nu. La demande de brevet US 2010/0071237 décrit aussi des éléments optiques de sécurité à effets lumineux variables, basés sur l'utilisation de surfaces diffractives dans lesquelles la forme et la disposition des microstructures sont adaptées pour modifier l'efficacité de la diffraction et proposer ainsi des effets visuels plus complexes.

Si ces composants permettent une excellente authentification à l'oeil nu par un observateur, il est cependant difficile de procéder à une authentification automatique fiable de ces composants optiques de sécurité. En effet, l'utilisation d'appareils d'acquisition d'images ordinaires (de type appareils photos numériques ou smart phones) ne permet pas la détection de détails tels que les microstructures d'un hologramme. Lorsqu'un appareil d'acquisition d'images à très forte résolution est utilisé, il reste néanmoins difficile d'obtenir d'un opérateur non expert une prise de vue exploitable, notamment du fait de la sélectivité angulaire des effets optiques diffractants.

La demande de brevet EP 0721849 divulgue des documents protégés contre la copie grâce à une technique particulière d'impression. Cependant, les procédés d'impression décrits ne sont pas compatibles avec la fabrication en grands volumes selon des procédés utilisés pour la fabrication de composants de type holographique.

La présente invention présente un composant optique de sécurité pouvant être authentifié facilement par un dispositif d'acquisition d'images et compatible avec une fabrication en grands volumes selon des procédés utilisés pour la fabrication de composants de type holographique. Notamment, le composant optique de sécurité décrit dans la présente demande peut être fabriqué par des méthodes similaires à celles des composants de type holographique, permettant de combiner lors d'un seul procédé de fabrication, différents types de composants optiques de sécurité.

### RESUME DE L'INVENTION

Selon un premier aspect, l'invention concerne un composant optique de sécurité destiné à être contrôlé en réflexion dans une bande spectrale de contrôle, tel que revendiqué dans la revendication 1. Le composant optique de sécurité comprend une couche réflective dans ladite bande spectrale de contrôle, ladite couche réflective présentant une zone structurée avec des microstructures réparties spatialement de façon uniforme sur l'ensemble de la zone pour former une structure optique au moins partiellement diffusante dans ladite bande spectrale de contrôle. Selon l'invention, les hauteurs des microstructures sont réparties selon une fonction aléatoire modulée sur ladite zone par une fonction de modulation pour former, après éclairement du composant selon un angle donné, une image identifiable par observation en réflexion.

La bande spectrale de contrôle est avantageusement dans le visible, par exemple incluse dans une bande comprise entre 380 nm et 780 nm. Les microstructures présentent une hauteur moyenne modulée, entraînant une efficacité de la diffusion variable en fonction des régions de la zone structurée, permettant lors de l'observation en réflexion du composant en réflexion directe ou indirecte, de reproduire une image correspondant à la fonction de modulation, avantageusement une image à haute résolution. L'observation de l'image ainsi formée peut se faire selon une plage angulaire large, rendant aisée l'authentification d'un produit muni d'un tel composant optique de sécurité par identification de l'image ou d'éléments de cette image au moyen d'un dispositif d'acquisition d'images. L'image formée est avantageusement une image de résolution supérieure à 2000 dpi (ou « dots per inch » selon l'expression anglo-saxonne), avantageusement supérieure à 3000 dpi ou davantage permettant la formation d'une image de qualité « photographique ».

Selon une variante, la répartition spatiale des microstructures sur ladite zone est aléatoire, la structure optique résultante étant au moins partiellement diffusante selon un lobe de diffusion sensiblement identique quel que soit l'azimut. Dans ce cas, l'observation du composant est peu sensible à l'azimut voire pas sensible à l'azimut.

Selon une variante, la répartition spatiale des microstructures sur ladite zone est ordonnée selon une direction, résultant en une observation d'un lobe de diffusion angulaire variable avec l'azimut.

Selon une variante, ladite fonction de modulation est déterminée à partir d'une image à haute résolution numérisée en niveaux de gris, par exemple une image à plus de 4000 dpi.

Selon une variante, ladite fonction de modulation est déterminée à partir de motifs répétitifs formant une « texture ».

Selon une variante, ladite fonction de modulation est déterminée à partir d'une image à haute résolution numérisée en niveaux de gris combinée avec une fonction modulatrice supplémentaire.

Selon une variante, ladite couche réflective est en métal. Le composant optique de sécurité peut comprendre en outre une couche en matériau transparent dans ladite bande spectrale de contrôle, présentant une face en contact avec ladite couche métallique structurée.

Selon une variante, ladite couche réflective est une couche diélectrique haut indice encapsulée entre deux couches de plus faible indice.

Selon un second aspect, l'invention concerne un élément optique de sécurité destiné à la sécurisation d'un produit et comprenant au moins un composant optique de sécurité selon le premier aspect.

Selon un troisième aspect, l'invention concerne un produit sécurisé comprenant un substrat et un élément optique de sécurité selon le second aspect, fixé sur ledit substrat.

Selon un quatrième aspect, l'invention concerne une méthode de fabrication d'un composant optique de sécurité telle que revendiquée dans la revendication 6.

Selon une variante, la méthode selon le quatrième aspect comprend en outre l'encapsulation de ladite couche réflective par une seconde couche.

Selon une variante, la méthode comprend une étape préalable de numérisation en niveaux de gris d'une image à haute définition pour former ladite fonction de modulation.

Selon une variante, la fonction de modulation obtenue par numérisation de ladite image à haute définition est modulée par une fonction dite de texture, permettant de faire apparaître des motifs répétitifs sur l'image formée après éclairement du composant.

### BREVE DESCRIPTION DES FIGURES

D'autres caractéristiques et avantages de l'invention apparaîtront à la lecture de la description qui suit, illustrée par les figures sur lesquelles :
Les figures 1A à 1C, des schémas montrant selon des coupes à une dimension, des exemples de profils respectivement de la fonction de répartition des hauteurs h(x) des microstructures avant modulation, de la fonction modulatrice F(x) et de la fonction de répartition des hauteurs h'(x) des microstructures après modulation;
Les figures 2A et 2B, des images d'un exemple de structure optique diffusante respectivement selon une vue bidimensionnelle de dessus et tridimensionnelle;
La figure 3A, un exemple illustratif de l'intensité lumineuse rétrodiffusée par le composant dans une région de la zone structurée où la hauteur moyenne des microstructures est nulle, et dans une région où la hauteur moyenne est non nulle;
Les figures 3B et 3C des courbes illustrant l'occurrence des fréquences spatiales des microstructures (par ligne de balayage dans l'image) dans le cas respectivement d'une répartition spatiale aléatoire et d'une répartition ordonnée selon une direction ;
Les figures 4A à 4D, des images montrant une fonction modulatrice selon une vue bidimensionnelle de dessus et selon une vue tridimensionnelle et des images montrant la structure optique réalisée après modulation par ladite fonction modulatrice d'une structure optique diffusante du type des figures 2A et 2B;
Les figures 5A à 5D, des images selon une vue bidimensionnelle de dessus respectivement d'une fonction modulatrice obtenue par numérisation en niveaux de gris d'une image à haute résolution, d'une structure optique diffusante, de la structure résultant de la modulation de la structure diffusante par ladite fonction modulatrice, de la structure résultant de la modulation de la structure diffusante par ladite fonction modulatrice lorsque celle-ci est de surplus modulée par une fonction dite de texture;
Les figures 6A et 6B des exemples de produits sécurisés comprenant des composants optiques de sécurité, selon deux exemples de réalisation ;
Figures 7A à 7F des exemples montrant des images originales (7A, 7B) et des images résultant de la contrefaçon (7C à 7F) ;
Figure 8, un exemple de détecteur pour l'authentification d'un composant optique de sécurité ;
Figures 9A à 9C des images obtenues avec le détecteur de la figure 8 sur chacune des images montrées sur les figures 7B, 7D, 7F.

### DESCRIPTION DETAILLEE

Le composant optique de sécurité selon l'invention comprend généralement une couche réflective avec une zone structurée. Sur la zone structurée se trouvent des microstructures réparties spatialement de façon uniforme sur l'ensemble de la zone pour former une structure optique au moins partiellement diffusante. Par répartition spatiale uniforme, on entend une répartition spatiale des microstructures apte à générer par illumination en tout point de la zone un effet optique similaire. La hauteur moyenne des microstructures est modulée sur la zone structurée par une fonction de modulation pour former, après éclairement du composant selon un angle donné, une image de haute résolution identifiable par observation en réflexion.

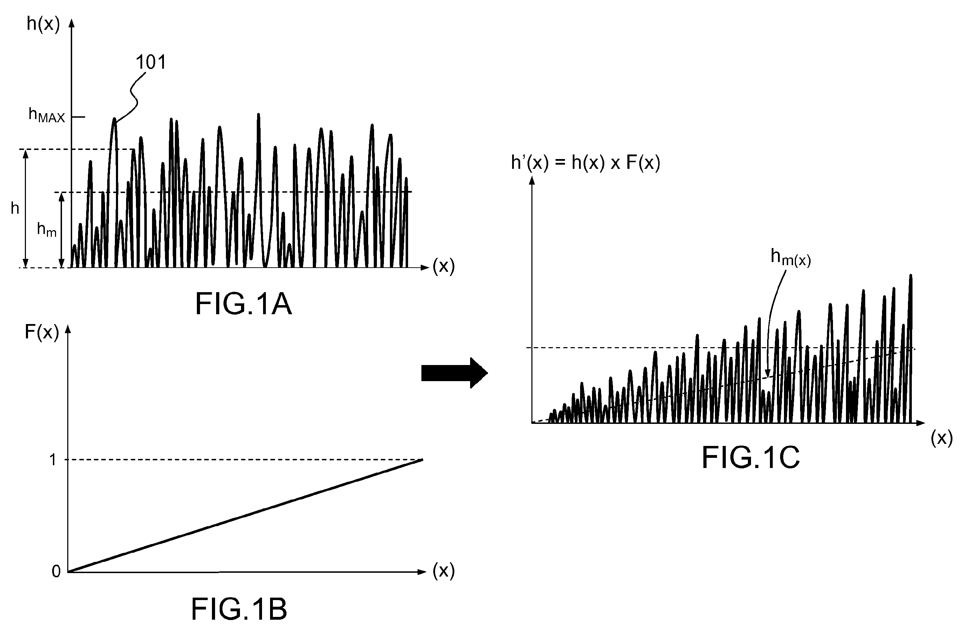

Les figures 1A à 1C représentent des schémas montrant selon des coupes à une dimension, des exemples de profils respectivement de la fonction de répartition des hauteurs h(x) de microstructures 101 avant modulation, d'une fonction modulatrice F(x) et de la fonction de répartition des hauteurs h'(x) des microstructures après modulation. Sur ces figures, l'échelle réelle des microstructures n'est pas respectée.

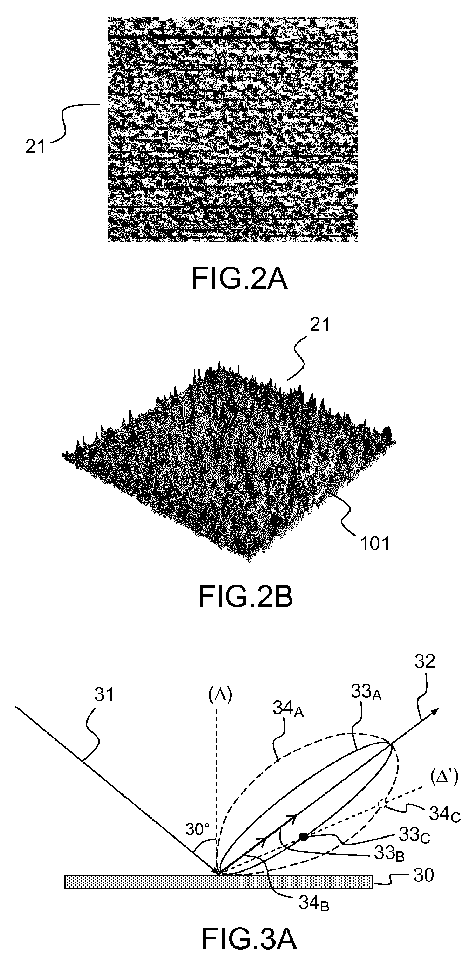

Dans l'exemple de la figure 1A, les microstructures 101 sont réparties selon une distribution aléatoire, à la fois spatialement et en hauteur. Un exemple d'une telle structure est représentée sur les figures 2A et 2B, montrant respectivement une vue bidimensionnelle de dessus d'une zone structurée 21 et une vue tridimensionnelle de la même zone. Ces images sont obtenues au moyen d'un microscope à force atomique (AFM) dans lequel une pointe balaye la surface pour effectuer une topographie par différence de potentiel électrique entre la pointe et la surface mesurée. La zone structurée 21 présente dans cet exemple une forme carrée de 80 microns de côté. Les microstructures sur la figure 2B présentent typiquement une hauteur maximale de quelques centaines de nanomètres, par exemple entre 400 et 600 nanomètres, par exemple autour de 500 nanomètres, et jusqu'à quelques microns. Les dimensions latérales des microstructures sont par exemple comparables aux dimensions des grains de cristal de bromure d'argent que l'on retrouve sur les photographies dites « argentiques », soit typiquement comprises entre 50 et 1000 nm, permettant d'obtenir des images de qualité « photographique ». A noter que sur les figures 2A et 2B les « lignes » apparentes proviennent d'artefact de mesure liés au balayage de l'image par la pointe.

La fonction modulatrice F(x) (figure 1B) est par exemple une fonction à variation continue, normalisée. Dans l'exemple de la figure 1B, il s'agit par exemple d'une fonction continue correspondant à un gradient de niveaux de gris. Ce gradient peut passer par exemple de 0 à 1 sur une distance linéaire réelle sur le composant comprise entre 100 µm et 10 cm.

En pratique la fonction modulatrice pourra être obtenue comme cela sera illustré dans d'autres exemples, par numérisation en niveaux de gris et photo réduction d'une image de haute définition, typiquement une image dont la résolution après photo réduction est supérieure à 2500 DPI (« Dots Per Inch » selon l'expression anglo-saxonne) correspondant à une image dont la finesse du point est inférieure à environ 10 µm.

La figure 1C illustre la fonction de répartition h'(x) des microstructures après modulation par la fonction modulatrice F(x). La répartition spatiale est inchangée mais la hauteur moyenne des microstructures est modulée en fonction de F(x).

La figure 3A représente grâce à un schéma illustratif l'effet de la structure ainsi obtenu après éclairement selon un angle donné. Le composant 30 portant la structure diffusante modulée (non représentée sur la figure 3A) est éclairée par un faisceau incident présentant un angle donné par rapport à la normale Δ à la surface du composant, par exemple 30°, angle d'éclairage généralement utilisé pour le contrôle de composants de type holographique. L'éclairage est fait par exemple au moyen d'une source blanche quelconque. Dans les zones du composant où la fonction modulatrice est nulle ou proche de zéro (par exemple zone sombre d'une image numérisée), les microstructures présentent une hauteur nulle ou quasi nulle (par exemple inférieure à 10 nm) et ne diffusent pratiquement pas. La lumière est donc complètement réfléchie par la couche réflective en contact avec la couche structurée et forme le faisceau 32 visible seulement en réflexion directe. En réflexion non directe, c'est-à-dire avec un angle supérieur ou inférieur à 30°, la zone sera donc vue noire. Dans les zones où la fonction modulatrice est non nulle, les microstructures présentent localement des hauteurs dont la moyenne varie avec la fonction modulatrice. Plus la hauteur moyenne des microstructures est grande, plus la diffusion est importante. Ainsi dans l'exemple de la figure 3A, on observe un lobe de diffusion 34_{A} élargi par rapport à un lobe de diffusion 33_{A}, le lobe de diffusion 34_{A} correspondant à une région de la zone structurée du composant dans laquelle la valeur de la fonction modulatrice est plus grande (il s'agit par exemple d'un point clair de l'image numérisée formant la fonction modulatrice) et le lobe de diffusion 33A correspondant à une région de la zone structurée du composant dans laquelle la valeur de la fonction modulatrice est plus faible (point sombre de l'image numérisée formant la fonction modulatrice). Au lobe de diffusion 34_{A} correspond une réflexion directe résiduelle symbolisée par la flèche 34_{B} d'intensité lumineuse inférieure à la réflexion directe symbolisée par la flèche 33_{B} correspondant au lobe de diffusion 33_{A}. L'image en réflexion directe est donc vue « en négatif » par rapport à l'image numérisée formant la fonction modulatrice. Par contre, le contrôle du composant selon un axe Δ' donné différent de la réflexion directe permettra de faire apparaître des intensités lumineuses correspondant aux niveaux de gris de l'image numérisée à l'origine de la fonction modulatrice. Sur la figure 3A, les intensités vues selon l'axe Δ' sont ainsi indiquées par le point 33_{C} pour la région de la zone structurée correspondant à un point plus sombre et 34_{C} pour la région de la zone structurée correspondant à un point plus clair. On observe ainsi sur l'axe d'observation Δ' une inversion du contraste en intensité lumineuse par rapport à une observation en réflexion directe.

Dans un premier niveau d'authentification d'un composant optique de sécurité selon la présente invention, il sera ainsi possible d'observer une inversion de contraste entre une observation à l'angle spéculaire (angle de réflexion directe) et une observation selon un axe différent de l'axe de réflexion directe. Dans une photo argentique ou un document imprimé au contraire, l'intensité lumineuse est soit absorbée par le pigment (plus la densité de pigment est importante et plus l'absorption est forte), soit réfléchie. L'information est donc visible avec un contraste identique quelque soit l'angle d'observation. Dans un composant optique de sécurité à modulation d'amplitude comme celui décrit dans la présente demande, l'absorption est nulle et la lumière peut être diffusée avec une intensité maximale à l'ordre spéculaire pour une région de faible amplitude de modulation (intensité #100% de la lumière incidente pour un miroir) ou peut être diffusée avec une intensité maximale à un angle différent de l'angle spéculaire pour une région de forte amplitude de modulation. Ce décalage des intensités maximales se traduit par une inversion de contraste entre la vision à l'angle spéculaire et la vision décalée de cet angle de référence, permettant un premier degré d'authentification par rapport à des images obtenues par photographie argentique ou par impression par exemple.

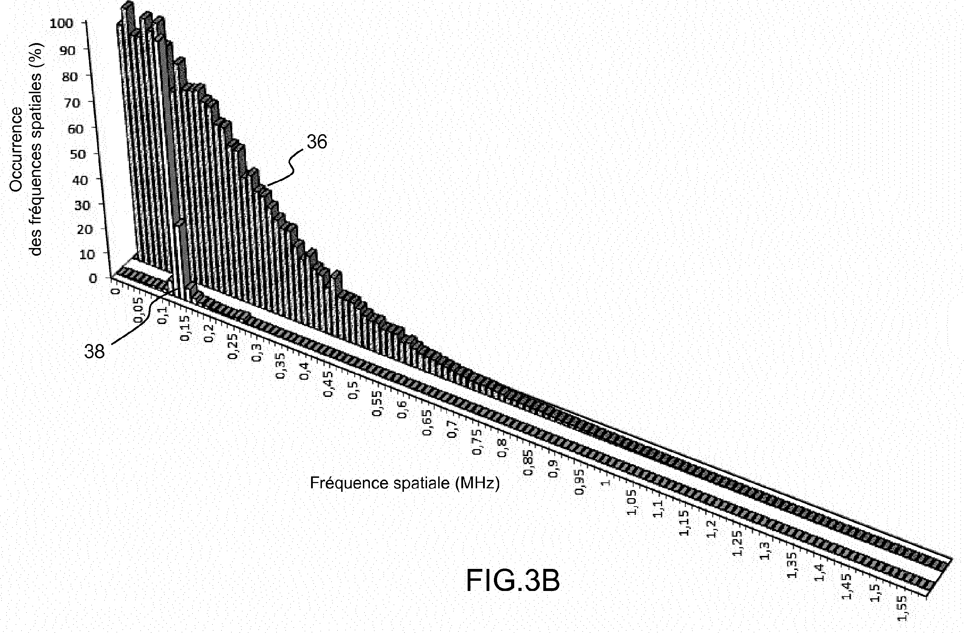

Dans l'exemple illustré sur les figures 2A et 2B, la répartition spatiale des microstructures est aléatoire dans toutes les directions, l'effet procuré étant celui d'un blanc diffusant isotrope. La figure 3B (courbe 36) illustre la distribution des fréquences spatiales des microstructures dans le cas d'une structure formant un blanc diffusant isotrope tel qu'illustré sur les figures 2A, 2B. La distribution est déterminée ici en calculant à une fréquence spatiale donnée, le nombre d'occurrences de cette fréquence dans l'image balayée au moyen du microscope AFM selon une direction d'analyse donnée. Plus précisément, sur la figure 3B, est représenté en ordonnée le rapport du nombre de lignes de balayage dans lesquelles la fréquence spatiale apparaît par le nombre de lignes de balayage total. La courbe 36 sur la figure 3B est comparée avec une courbe 38 de la distribution des fréquences spatiales dans le cas d'une structure diffractive (formée d'un réseau de période donnée dans la direction d'analyse considérée). Dans le cas d'une structure formant un blanc diffusant isotrope (courbe 36), on observe une distribution homogène des fréquences spatiales des microstructures, suivant une courbe proche d'une Lorentzienne, tandis que dans le cas d'une structure diffractive, la répartition des fréquences présente un pic de distributions centralisé sur la fréquence correspondant à la période du réseau. Dans le cas d'une structure formant un blanc diffusant isotrope, la courbe de distribution est identique quelle que soit la direction d'analyse considérée.

Selon une variante, les microstructures peuvent être agencées spatialement de façon ordonnée selon au moins une direction, formant alors un effet de diffusion spatialement orientée. Cela se traduit par une variation de l'intensité lumineuse observée en fonction de l'azimut et ajoute un degré de contrôle supplémentaire. Cependant, lorsque les microstructures sont ordonnées selon une direction principale formant des lignes, on prend soin de ne pas introduire de période dans l'arrangement des lignes pour garder un aspect « blanc ».

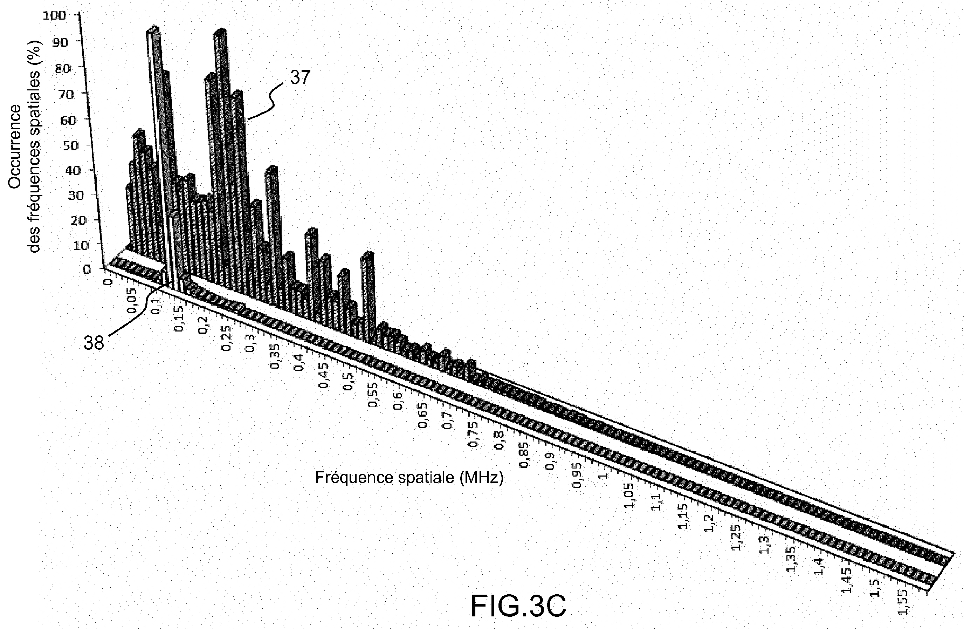

La figure 3C illustre ainsi la distribution des fréquences spatiales des microstructures dans un cas où les microstructures sont agencées spatialement de façon ordonnée selon une direction (courbe 37) comparée avec la courbe 38 de la distribution des fréquences spatiales dans le cas d'une structure diffractive. On continue d'observer dans ce cas une distribution des fréquences spatiales sur une plage de fréquence similaire à celle observée pour la structure formant un blanc diffusant isotrope. Cependant, on observe une multiplicité de maximum locaux d'occurrences de fréquences spatiales à des fréquences non nulles.

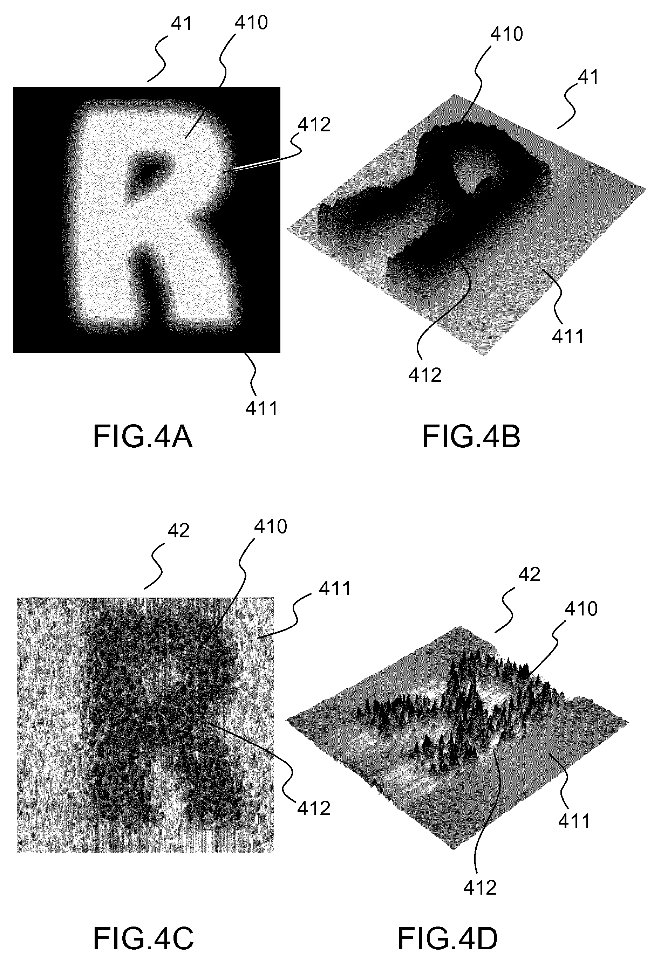

Les figures 4A à 4D montrent des images d'une fonction modulatrice selon une vue bidimensionnelle de dessus (figure 4A) et selon une vue tridimensionnelle (figure 4B) et des images montrant la structure optique réalisée après modulation par ladite fonction modulatrice d'une structure optique diffusante du type des figures 2A et 2B, respectivement selon une vue bidimensionnelle de dessus (figure 4C) et selon une vue tridimensionnelle (figure 4D).

La figure 4A montre l'image 41 obtenue après numérisation et photo réduction d'une image numérique de haute définition. La taille de l'image est sensiblement identique à celle d'une zone structurée du type de celle représentée sur la figure 2A, soit environ 80 x 80 microns. Dans cet exemple, l'image représente un « R » identifiable. Elle comprend une partie 410 dans laquelle l'intensité est maximale, égale par exemple à 1, une partie 411 dans laquelle l'intensité est nulle et une partie 412 de transition entre la partie 410 et la partie 411. Dans la partie 412, on observe une diminution progressive de l'intensité des points de l'image. On retrouve ces zones sur la vue tridimensionnelle de la figure 4B. Pour obtenir le composant optique de sécurité, une zone structurée du type de celle représentée sur les figures 2A et 2B est modulée par la fonction de modulation de la figure 4A. On obtient alors une zone structurée 42 telle que représentée sur les figures 4C et 4D. Les microstructures présentent une hauteur moyenne maximale dans la zone 410, une hauteur nulle dans la zone 411 et une hauteur moyenne décroissante dans la zone 412. Après éclairement du composant optique de sécurité avec un angle d'incidence donné, par exemple 30°, une image pourra être observée, soit en réflexion directe, soit en réflexion indirecte. La structure étant formée sur une couche réflective, la partie plane (411) présentera un coefficient maximal de réflexion en réflexion directe, tandis que la partie 411 présentera une diffusion maximale et donc une réflexion directe minimale. L'image sera donc observée en « négatif », les zones blanches de l'image étant vues noir et inversement. Au contraire, si l'on observe l'image en réflexion non directe, c'est-à-dire avec un angle différent de l'angle d'incidence, l'effet de diffusion sera maximal pour les parties dans lesquelles les microstructures sont de hauteur moyenne plus grande et minimale pour les parties dans lesquelles les microstructures sont de hauteurs plus faibles. L'image sera alors vue en « positif ». La complémentarité des deux images permet lors du contrôle automatique de s'affranchir des problèmes angulaires que l'on peut rencontrer avec des images diffractives. A cet effet, le traitement d'image associé à l'élément pourra considérer les valeurs absolues des variations.

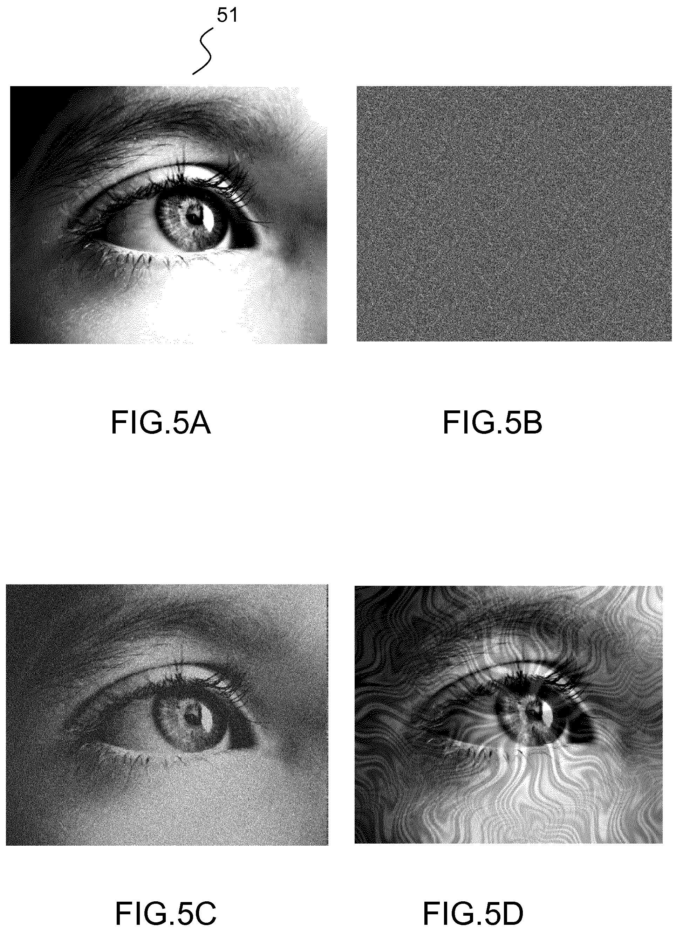

Les figures 5A à 5D montrent des images selon une vue bidimensionnelle de dessus respectivement d'une fonction modulatrice obtenue par numérisation en niveaux de gris et photo réduction d'une image à haute résolution (figure 5A), d'une structure optique diffusante (figure 5B), de la structure résultant de la modulation de la structure diffusante par ladite fonction modulatrice (figure 5C), de la structure résultant de la modulation de la structure diffusante par ladite fonction modulatrice lorsque celle-ci est de surplus modulée par une fonction de texture (figure 5D).

Dans cet exemple, l'image initiale 51 est complexe, présentant des variations en niveaux de gris avec une très forte résolution pour obtenir une image identifiable (ici, un oeil). La figure 5B illustre une vue de dessus d'une structure aléatoire qui est modulée par la fonction de modulation formée à partir de l'image de la figure 5A pour former la structure 5C. L'image obtenue en réflexion par une structure de ce type, présentant des microstructures dont la hauteur moyenne est modulée en fonction de la fonction de modulation définie par l'image 51, permettra de former en réflexion indirecte, une image de haute résolution dont les contours, la « couleur » (niveaux de gris), la texture pourront être identifiés par un dispositif d'acquisition numérique afin d'authentifier un produit sur lequel est agencé le composant optique de sécurité. Pour faciliter encore l'authentification, la fonction de modulation peut être définie à partie de l'image 51 à laquelle on ajoute une « texture », formée de motifs périodiques, à une ou deux dimensions, dont les dimensions caractéristiques sont typiquement au moins 20 fois supérieures aux dimensions des microstructures. Une telle fonction de modulation est illustrée sur la figure 5D. Cela permet de créer des éléments d'identification supplémentaires dans l'image observée et donc de la complexifier.

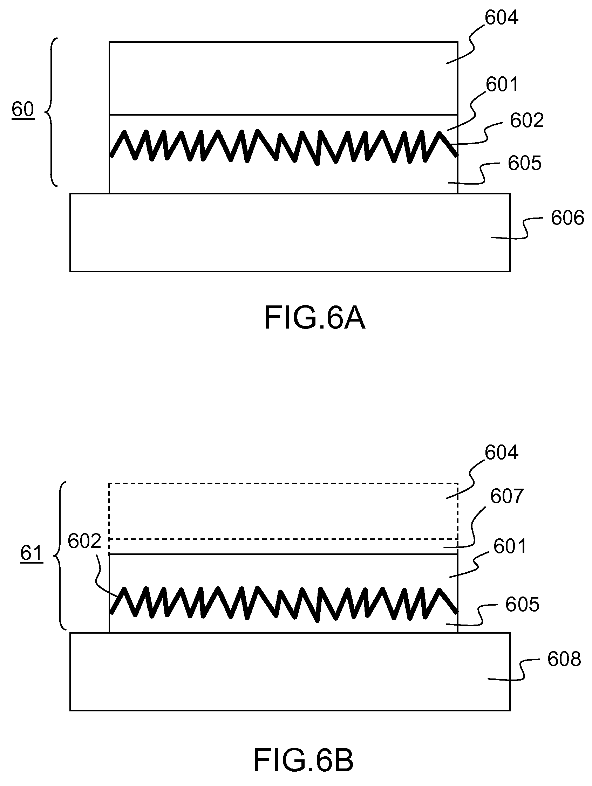

Les figures 6A et 6B représentent de façon schématique une vue en coupe d'un produit sécurisé sur lequel est agencé un composant optique de sécurité selon deux variantes. Dans l'exemple de la figure 6A, il s'agit d'un composant 60 de type étiquette, destiné à être collée sur un produit 606 à sécuriser. Dans l'exemple de la figure 6B, il s'agit d'un composant 61 destiné à être transféré à chaud sur un substrat 608, par exemple une feuille de papier ou de plastique d'un document de sécurité.

Les composants de sécurité 60, 61 peuvent être réalisés de la façon suivante. Les structures optiques sont enregistrées par photolithographie ou lithographie par faisceau d'électrons sur un support photosensible ou « photorésist » selon l'expression anglo-saxonne. Cette étape permet de réaliser la ou les zones structurées en utilisant par exemple des masques numériques combinant la fonction aléatoire et la fonction de modulation. Une étape de galvanoplastie permet de reporter ces structures optiques dans un matériau résistant par exemple à base de Nickel pour réaliser la matrice ou « master ». Un estampage est réalisé à partir de la matrice pour transférer la microstructure sur un film et structurer une couche en matériau transparent 601 (figure 6A, 6B), typiquement un vernis d'estampage de quelques microns d'épaisseur porté par un film 604 de 12 μm à 50 μm en matériau polymère, par exemple en PET (polyéthylène téréphtalate). L'estampage peut être fait par pressage à chaud du matériau transparent (« hot embossing ») ou par moulage (« UV casting » ou « UV Curing »). L'indice de réfraction de la couche formée du vernis d'estampage est typiquement de 1,5. Vient ensuite le dépôt sur la couche ainsi embossée d'une couche réflective (602, figures 6A, 6B). La couche réflective peut être soit une couche métallique, par exemple une couche en aluminium, d'épaisseur typiquement comprise entre 20 et 100 nm, soit une couche haut indice, dont l'indice optique est avantageusement supérieur à 1,7, par exemple en sulfure de zinc (ZnS). L'épaisseur d'une telle couche est par exemple compris entre 40 et 150 nm pour du ZnS. Une couche de fermeture 605 peut ensuite être appliquée, par exemple par un procédé d'enduction. Pour certaines applications, telles que les produits de laminage ou de marquage à chaud, cette couche peut être la couche adhésive (figure 6B). La couche de fermeture présente typiquement une épaisseur supérieure à plusieurs microns. Selon la destination finale du produit, un adhésif peut être appliqué sur la couche de fermeture ou directement sur la couche réflective. Selon une variante, une couche de détachement 607 (par exemple une cire) peut être appliquée entre le vernis d'estampage 601 et le film support 604 en PET. On transfert l'élément de sécurité sur le document en pressant à chaud l'élément de sécurité sur le document, le composant de sécurité 61 se trouvant face au document. Pendant le transfert, le film adhésif colle sur le support du document et la couche de détachement ainsi que le film support sont retirés.

Comme cela apparaît au vue de l'exemple de méthode de fabrication décrite ci-dessus, l'inclusion d'un composant optique de sécurité selon l'invention dans un document sécurisé est compatible avec la présence dans le même document de structures à base de réseaux habituellement utilisées pour la réalisation de composants holographiques.

Notamment, il sera possible de réaliser un élément optique de sécurité comprenant un ou plusieurs composants tels que décrits précédemment et un ou plusieurs autres type de composants optiques de sécurité, par exemple de type holographique et par exemple de type DOVID.

Pour cela une matrice pourra être réalisée par enregistrement des différents motifs correspondants aux différents composants optiques de sécurité sur le support photorésist qui sera par la suite transférer sur un support nickel par galvanoplastie. L'estampage peut ensuite être réalisé à partir de la matrice pour transférer les différentes microstructures sur le film en matériau polymère, destiné à l'embossage. Le dépôt de la couche réflective pour les composants selon l'invention pourra être fait sur l'ensemble du film, car elle ne gênera pas les autres composants de type DOVID fonctionnant également en réflexion.

Ainsi que cela a été précédemment décrit à travers une série d'exemples illustratifs, le composant optique de sécurité comporte une structure optique modulée, qui sous éclairement avec un angle donné, permettra de former en réflexion directe et indirecte, une image reconnaissable de qualité photographique, en niveaux de gris, avec éventuellement des effets de texture sous la forme de motifs répétitifs, qui peuvent être selon une variante périodiques et/ou directionnels.

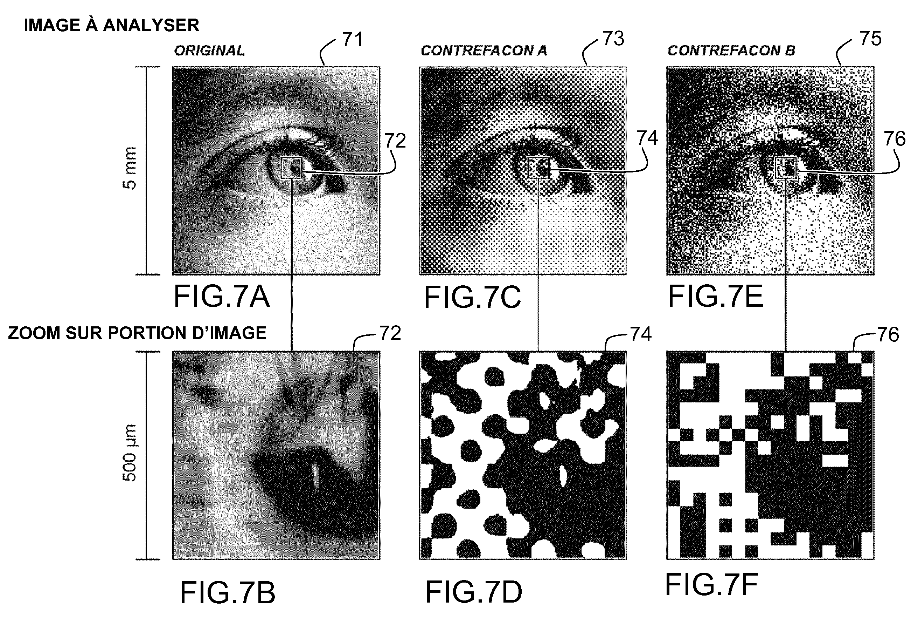

La contrefaçon d'un tel composant peut être réalisée soit par tentative de reproduction du même procédé mais avec une technologie moins performante, soit par tentative de reproduction au moyen d'un dispositif de reproduction numérique (scanner) ou d'une photocopieuse. Les figures 7A, 7C et 7E représentent ainsi respectivement une image originale 71 obtenue par la méthode décrite dans la présente demande, une image 73 résultant de la tentative de contrefaçon du composant par un procédé du type de l'impression tramée (contrefaçon A), une image 75 résultant d'une tentative de contrefaçon par un procédé de type holographique (contrefaçon B). Les images 72, 74, 76 représentées sur les figures 7B, 7D, 7F respectivement sont des agrandissements réalisés à partir d'une zone des images 71, 73, 75. Comme cela apparaît sur la figure 7D, la contrefaçon de type A entraîne l'obtention d'une image constituée de points noirs orientés selon une trame (image binaire). Comme cela apparait sur la figure 7F, une contrefaçon de type F résulte en l'obtention d'une image constituée de points sensiblement plus fins que dans l'image obtenue par la contrefaçon de type A, mais là encore, image résultante est binaire.

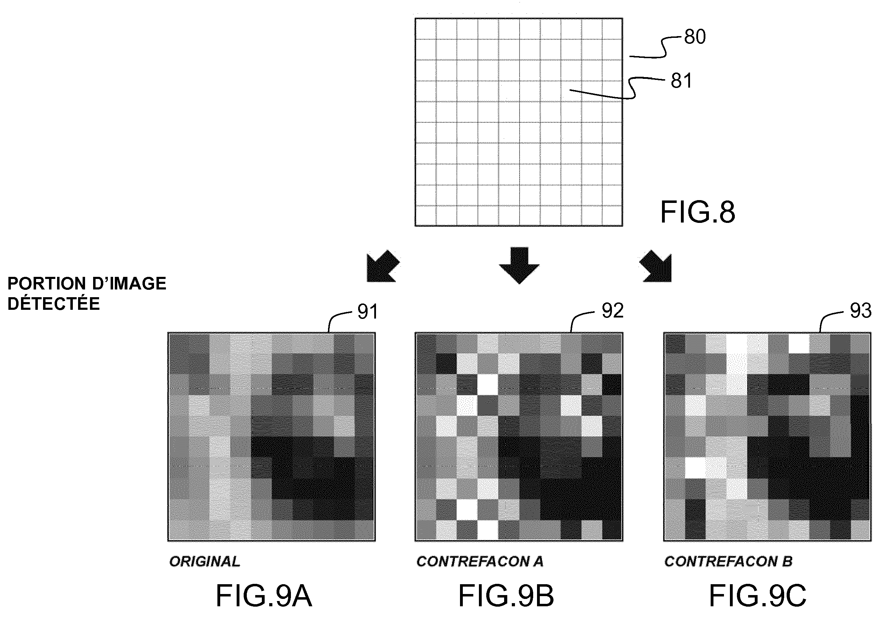

Lors de l'authentification au moyen d'un détecteur dont une matrice 80 de pixels 81 est illustrée sur la figure 8, une image est observée qui apparaît déformée du fait de la résolution plus basse du détecteur. Ainsi, l'image 91 formée par le détecteur 80 à partir de l'image originale 72 est représentée sur la figure 9A et les images 92 et 93 formées par le détecteur 80 à partir des images résultant de la contrefaçon de type A ou B sont représentées sur les figures 9B et 9C respectivement. Si la faible résolution du détecteur d'authentification entraîne une « pixellisation » de l'image originale, on observe cependant que les structures des images formées par le détecteur d'authentification à partir des contrefaçons diffèrent de l'image formée à partir de l'originale. Notamment, on observe sur les images 92, 93 obtenues par formation de l'image des images 74, 76, issues de la contrefaçon, l'apparition de pixels blancs et noirs qui n'étaient pas dans l'image 91 formée à partir de l'image originale. C'est l'analyse des éléments structurels de l'image qui va permettre de détecter la contrefaçon par exemple grâce à des algorithmes de traitement d'images basées sur la détection de la forme et/ou des niveaux de gris et/ou de la texture.

Bien que décrite à travers un certain nombre d'exemples de réalisation, le composant optique de sécurité selon l'invention et le procédé de fabrication dudit composant comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

## Revendications

1. Composant optique de sécurité destiné à être contrôlé en réflexion par un dispositif d'acquisition dans une bande spectrale de contrôle, comprenant :
- une couche réflective (602) dans ladite bande spectrale de contrôle, déposée sur une face structurée d'une couche en matériau transparent dans ladite bande spectrale de contrôle, ladite face structurée présentant une zone structurée (42) comprenant :
- des microstructures (101) réparties spatialement de façon aléatoire sur l'ensemble de la zone structurée (42) avec une distribution des fréquences spatiales suivant une courbe proche d'une Lorentzienne, pour former une structure optique qui, sous éclairement dans ladite bande spectrale de contrôle, forme un blanc diffusant isotrope, les hauteurs desdites microstructures étant réparties selon une fonction aléatoire modulée sur ladite zone par une fonction de modulation pour former, après éclairement du composant selon un angle donné, une première image en niveaux de gris identifiable par observation en réflexion directe et une deuxième image en niveaux de gris identifiable par observation en réflexion indirecte, identique à la première image mais présentant un contraste inversé.

2. Composant optique de sécurité selon la revendication 1, dans lequel ladite fonction de modulation est déterminée à partir d'une image à haute résolution (41, 51) numérisée en niveaux de gris.

3. Composant optique de sécurité selon l'une quelconque des revendications précédentes, dans lequel ladite fonction de modulation est déterminée à partir d'un ensemble de motifs répétitifs pour former une « texture ».

4. Elément optique de sécurité destiné à la sécurisation d'un produit et comprenant au moins un composant optique de sécurité selon l'une des revendications précédentes.

5. Produit sécurisé comprenant un substrat et un élément optique de sécurité selon la revendication 4, fixé sur ledit substrat.

6. Méthode de fabrication d'un composant optique de sécurité destiné à être contrôlé en réflexion dans une bande spectrale de contrôle comprenant :
- le dépôt d'une couche réflective (602) dans ladite bande spectrale de contrôle sur une face structurée d'une première couche (601) en matériau transparent dans ladite bande spectrale de contrôle, ladite face structurée comprenant au moins une zone structurée avec des microstructures réparties spatialement de façon aléatoire sur l'ensemble de la zone avec une distribution des fréquences spatiales suivant une courbe proche d'une Lorentzienne, pour former une structure optique qui, sous éclairement dans ladite bande spectrale de contrôle, forme un blanc diffusant isotrope, les hauteurs desdites microstructures étant réparties selon une fonction aléatoire modulée sur ladite zone par une fonction de modulation pour former, après éclairement du composant selon un angle donné, une première image en niveaux de gris identifiable par observation en réflexion directe et une deuxième image en niveaux de gris identifiable par observation en réflexion indirecte, identique à la première image mais présentant un contraste inversé.

7. Méthode de fabrication d'un composant optique de sécurité selon la revendication 5, comprenant en outre l'encapsulation de ladite couche réflective par une seconde couche (605).

8. Méthode de fabrication d'un composant optique de sécurité selon l'une quelconque des revendications 6 ou 7, comprenant une étape préalable de numérisation en niveaux de gris d'une image à haute définition pour former ladite fonction de modulation.

9. Méthode de fabrication d'un composant optique de sécurité selon l'une quelconque des revendications 6 à 8, dans laquelle la fonction de modulation obtenue par numérisation de ladite image à haute définition est modulée par une fonction de texture, permettant de faire apparaître des motifs répétitifs sur l'image formée après éclairement du composant.

## Patentansprüche

1. Optische Sicherheitskomponente, die dazu vorgesehen ist, durch eine Erfassungsvorrichtung in Bezug auf die Reflexion in einem Steuerspektralband gesteuert zu werden, und das Folgendes umfasst:
- eine in dem besagten Steuerspektralband reflektierende Schicht (602), die auf einer strukturierten Fläche einer Schicht aus einem in dem besagten Steuerspektralband transparenten Material abgelagert ist, wobei die besagte strukturierte Fläche eine strukturierte Zone (42) aufweist, die Folgendes umfasst:
- Mikrostrukturen (101), die zufällig auf der Gesamtheit der strukturierten Zone (42) mit einer Verteilung räumlicher Frequenzen gemäß einer Kurve, die einer Lorentz-Verteilung nahe kommt, räumlich verteilt sind, um eine optische Struktur zu bilden, die unter Beleuchtung in dem besagten Steuerspektralband ein isotrop diffundierendes Weiß bildet, wobei die Höhen der besagten Mikrostrukturen gemäß einer Zufallsfunktion, die in der besagten Zone durch eine Modulationsfunktion moduliert wird, verteilt sind, um nach Beleuchtung der Komponente gemäß einem gegebenen Winkel ein erstes Bild in Graustufen, das durch Betrachtung bei direkter Reflexion identifizierbar ist, und ein zweites Bild in Graustufen, das durch Betrachtung bei indirekter Reflexion identifizierbar ist und das mit dem ersten Bild identisch ist, jedoch einen umgekehrten Kontrast aufweist, zu bilden.

2. Optische Sicherheitskomponente nach Anspruch 1, wobei die besagte Modulationsfunktion aus einem hochauflösenden Bild (41, 51), das in Graustufen digitalisiert wurde, bestimmt wird.

3. Optische Sicherheitskomponente nach einem der vorhergehenden Ansprüche, wobei die besagte Modulationsfunktion aus einer Gesamtheit von sich wiederholenden Motiven bestimmt wird, um eine "Textur" zu bilden.

4. Optisches Sicherheitselement, das zur Sicherung eines Produkts vorgesehen ist und mindestens eine optische Sicherheitskomponente nach einem der vorhergehenden Ansprüche umfasst.

5. Gesichertes Produkt, das einen Träger und ein optisches Sicherheitselement nach Anspruch 4, das auf dem besagten Träger angebracht ist, umfasst.

6. Verfahren zur Herstellung einer optischen Sicherheitskomponente, die dazu vorgesehen ist, in Bezug auf die Reflexion in einem Steuerspektralband gesteuert zu werden, wobei das Verfahren Folgendes umfasst:
- Ablagerung einer in dem besagten Steuerspektralband reflektierenden Schicht (602) auf einer strukturierten Fläche einer ersten Schicht (601) aus einem in dem besagten Steuerspektralband transparenten Material, wobei die besagte strukturierte Fläche mindestens eine strukturierte Zone mit Mikrostrukturen umfasst, die zufällig auf der Gesamtheit der Zone mit einer Verteilung räumlicher Frequenzen gemäß einer Kurve, die einer Lorentz-Verteilung nahe kommt, räumlich verteilt sind, um eine optische Struktur zu bilden, die unter Beleuchtung in dem besagten Steuerspektralband ein isotrop diffundierendes Weiß bildet, wobei die Höhen der besagten Mikrostrukturen gemäß einer Zufallsfunktion, die in der besagten Zone durch eine Modulationsfunktion moduliert wird, verteilt sind, um nach Beleuchtung der Komponente gemäß einem gegebenen Winkel ein erstes Bild in Graustufen, das durch Betrachtung bei direkter Reflexion identifizierbar ist, und ein zweites Bild in Graustufen, das durch Betrachtung bei indirekter Reflexion identifizierbar ist und das mit dem ersten Bild identisch ist, jedoch einen umgekehrten Kontrast aufweist, zu bilden.

7. Verfahren zur Herstellung einer optischen Sicherheitskomponente nach Anspruch 5, das außerdem die Einkapselung der besagten reflektierenden Schicht durch eine zweite Schicht (605) umfasst.

8. Verfahren zur Herstellung einer optischen Sicherheitskomponente nach einem der Ansprüche 6 oder 7, das einen vorherigen Schritt der Digitalisierung eines hochauflösenden Bilds in Graustufen umfasst, um die besagte Modulationsfunktion zu bilden.

9. Verfahren zur Herstellung einer optischen Sicherheitskomponente nach einem der Ansprüche 6 bis 8, wobei die durch Digitalisierung des besagten hochauflösenden Bilds erhaltene Modulationsfunktion durch eine Texturfunktion moduliert wird, was ermöglicht, sich wiederholende Motive auf dem nach Beleuchtung der Komponente gebildeten Bild erscheinen zu lassen.

## Claims

1. Optical security component intended to be checked in reflection by an acquisition device in a checking spectral band, comprising:
- a layer (602) which is reflective in the said checking spectral band, deposited on a structured surface of a material layer transparent in the said checking spectral band, wherein said structured surface exhibits a structured zone (42) comprising:
- microstructures (101) spatially distributed in a random manner over the whole of the structured zone (42) with a spatial frequency distribution following a lorentzian curve so as to form an optical structure which under illumination in the said checking spectral band forms an isotropic diffusing white, wherein the heights of said microstructures are distributed according to a random function, modulated over the said zone by a modulation function so as to form, after illumination of the component at a given angle, a first image in grey levels identifiable by observation in direct reflection and a second image in grey levels identifiable by observation in indirect reflection, identical to the first image with the exception of a reversed contrast.

2. Optical security component according to claim 1, in which the said modulation function is determined on the basis of a high-resolution image (41, 51) digitized into grey levels.

3. Optical security component according to any one of the preceding claims, in which the said modulation function is determined on the basis of a set of repetitive patterns so as to form a "texture".

4. Optical security element intended for the securing of a product and comprising at least one optical security component according to one of the preceding claims.

5. Secure product comprising a substrate and an optical security element according to claim 4, fixed on the said substrate.

6. Method for fabricating an optical security component intended to be checked in reflection in a checking spectral band comprising:
- the deposition of a layer (602) which is reflective in the said checking spectral band on a structured surface of a first material layer (601) which is transparent in the said checking spectral band, the said structured surface comprising at least one zone structured with microstructures distributed spatially in a random manner over the whole of the zone with a spatial frequency distribution following a lorentzian curve, so as to form an optical structure which under illumination in the said checking spectral band, forms an isotropic diffusing white, wherein the heights of the said microstructures are distributed according to a random function, modulated over the said zone by a modulation function so as to form, after illumination of the component at a given angle, a first image in grey levels identifiable by observation in direct reflection and a second image in grey levels identifiable by observation in indirect reflection, identical to the first image with the exception of a reversed contrast.

7. Method for fabricating an optical security component according to claim 5, furthermore comprising the encapsulation of the said reflective layer by a second layer (605).

8. Method for fabricating an optical security component according to either one of claims 6 or 7, comprising a prior step of digitizing a high-definition image into grey levels so as to form the said modulation function.

9. Method for fabricating an optical security component according to one of claims 6 to 8, in which the modulation function obtained by digitizing the said high-definition image is modulated by a texture function, making it possible to reveal repetitive patterns on the image formed after illumination of the component.
